Europäisches Patentamt

European Patent Office

Office européen des brevets

(11) Numéro de publication: **0 389 335**
**A2**

## (12) DEMANDE DE BREVET EUROPEEN

(21) Numéro de dépôt: **90400673.1**

(22) Date de dépôt: **14.03.90**

(51) Int. Cl.⁵: **G01D 5/04, B60G 17/052**

(30) Priorité: **17.03.89 FR 8903508**

(43) Date de publication de la demande:
**26.09.90 Bulletin 90/39**

(84) Etats contractants désignés:
**DE ES GB IT**

(71) Demandeur: **REGIE NATIONALE DES USINES RENAULT**
**Boîte postale 103 8-10 avenue Emile Zola**

**F-92109 Boulogne-Billancourt(FR)**

(72) Inventeur: **Chevret, Rémy**
**29, rue du Faubourg Saint Denis**
**F-75010 Paris(US)**

(74) Mandataire: **Saint Martin, René et al**
**Régie Nationale des Usines Renault 8 & 10,**
**avenue Emile Zola**
**F-92109 Boulogne Billancourt(FR)**

(54) **Capteur linéaire pour correction d'assiette.**

㊼ Dispositif de fixation d'un capteur linéaire (1) sur la barre anti-dévers (2) de la suspension d'un véhicule automobile.

Le corps du capteur (1) est fixé sur la barre anti-dévers (2) par un ensemble de cales (8, 9) et une sangle (10). L'extrémité (6) de la tige coulissante du capteur (1) est reliée à la structure (4) par une biellette (5).

L'ensemble ainsi obtenu est d'un encombrement minimum.

FIGURE. 1

COURSE CAPTEUR

La présente invention concerne le montage, sur un ensemble de suspension, d'un capteur linéaire de position utilisé pour la correction de l'assiette du véhicule.

Ce type de correction employé actuellement sur les véhicules industriels, ou poids lourds, utilise des capteurs d'un type à commande rotative. Leur encombrement est important et leur implantation sur un véhicule de tourisme est délicate.

Un autre inconvénient de cet appareil est un manque de précision de la mesure, car le déplacement de l'élément interne actif est assuré par un système articulé avec une bielle et une manivelle dont les articulations ne sont pas exemptes de jeu.

L'invention décrit le montage d'un capteur linéaire de faible dimension, associé à une barre anti-dévers, ce qui facilite son montage tout en limitant au maximum son encombrement.

Les dessins annexés illustrent l'invention :

- La figure 1 représente une vue en élévation du dispositif,

- La figure 2 représente une coupe 2.2 de la figure 1,

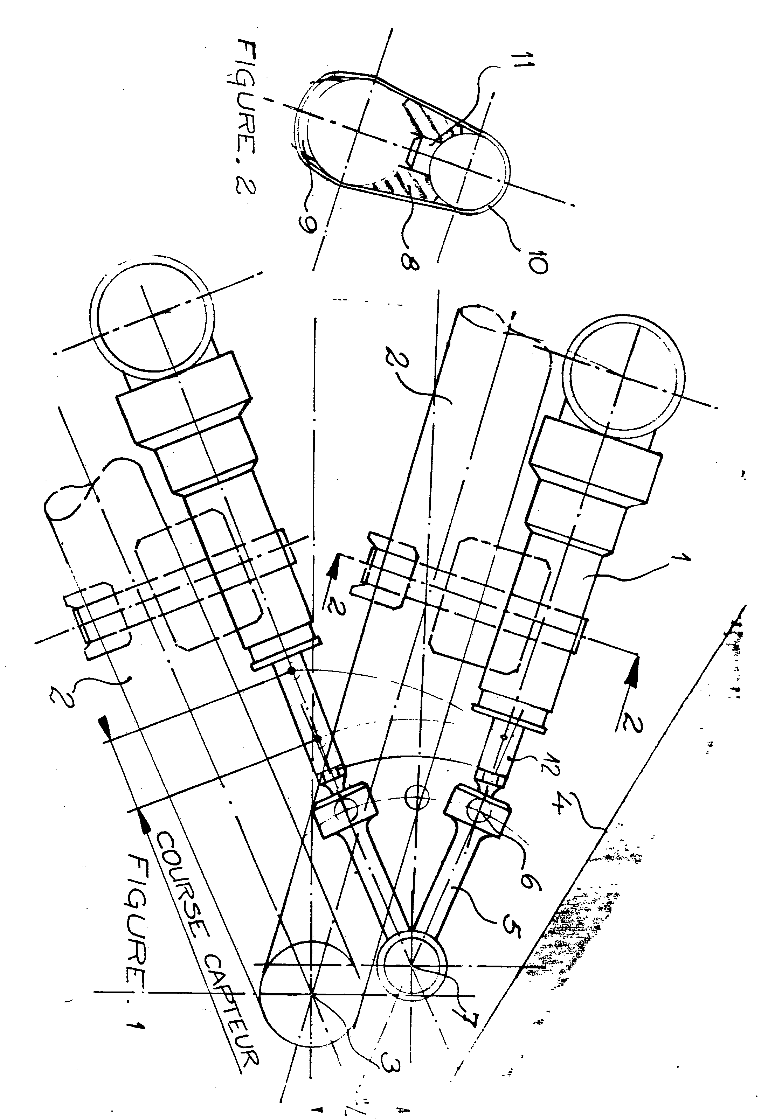

Sur la figure 1, on peut voir le capteur 1 fixé sur la barre anti-dévers 2. La barre anti-dévers 2 pivote en 3 sur ses paliers fixés sur la structure 4. Une biellette 5 articulée en 6 à l'extrémité de la tige du capteur 1 et en 7 sur un point fixe par rapport à la structure, et préférentiellement sur le palier d'articulation 3 de la barre anti-dévers, compense les erreurs d'alignement et ménage ainsi les éléments de guidage interne du capteur.

Le déplacement de la tige 12 du capteur 1 est possible grâce à la non coaxialité des axes 3 et 7. La course de la tige 10 du capteur 1 est fonction de la distance "L" qui sépare les axes 3 et 7 : Plus "L" est grand, plus la course augmente pour un même débattement de la barre anti-dévers 2.

La figure 2 montre le corps du capteur 1 qui est rendu solidaire de la barre anti-dévers 2, par l'intermédiaire d'un jeu de cales en élastomère 8 et 9, et une sangle 10. Un plot 11 appartenant au corps du capteur localise celui-ci sur la cale 8. De cette façon, le montage de l'ensemble peut se faire en dehors du véhicule, avec un maximum de précision car la course utile du capteur est très réduite.

Sur la figure 1, on voit la cinématique du débattement provoquant le déplacement de la tige du capteur 1.

## Revendications

1) Dispositif de montage d'un capteur linéaire (1) pour correction d'assiette de véhicule automobile, caractérisé en ce que le corps dudit capteur (1) est rendu solidaire de la barre anti-dévers (2) qui pivote en (3) sur la structure (4) du véhicule et que l'extrémité (6) de la tige coulissante du capteur (1) est rendue solidaire du chassis en (7).

2) Dispositif selon la revendication 1, caractérisé en ce que la liaison du corps du capteur (1) avec la barre anti-dévers 2 est assurée par un ensemble de cales (8, 9) en élastomère et une sangle (10).

3) Dispositif selon la revendication 1, caractérisé en ce que la tige coulissante du capteur (1) est reliée à la structure (4) par une biellette (5) articulée en (6) à l'extrémité de la tige et en (7) à la structure.

4) Dispositif selon les revendications 1 et 3, caractérisé en ce que l'articulation (7) de la biellette (5) est montée sur le palier (3) de la barre anti-dévers.

FIGURE. 2

FIGURE. 1

COURSE CAPTEUR